(19) Europäisches Patentamt
European Patent Office
Office européen des brevets

(11) **EP 2 063 597 A2**

(12) **EUROPÄISCHE PATENTANMELDUNG**

(43) Veröffentlichungstag:
**27.05.2009 Patentblatt 2009/22**

(51) Int Cl.:
***H04L 27/38*** (2006.01)

(21) Anmeldenummer: **08019824.5**

(22) Anmeldetag: **13.11.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **22.11.2007 DE 102007056490**

(71) Anmelder: **Micronas GmbH**
**79108 Freiburg (DE)**

(72) Erfinder: **Bock, Christian**
**79108 Freiburg (DE)**

(74) Vertreter: **Patentanwälte**
**Westphal, Mussgnug & Partner**
**Am Riettor 5**
**78048 Villingen-Schwenningen (DE)**

(54) **Verfahren und Schaltungsanordnung zum Entscheiden eines Symbols beim Empfang von mit einem Quadratursignalpaar gekoppelten empfangenen Symbolen**

(57) Die Erfindung bezieht sich auf ein Verfahren und eine Schaltungsanordnung zum Entscheiden eines Symbols (S) beim Empfang von mit einem Quadratursignalpaar (I, Q) gekoppelten empfangenen Symbolen. Zum Entscheiden eines Symbols beim Empfang eines Eingangssignals mit mit einem Quadratursignalpaar gekoppelten empfangenen Symbolen (S), bei dem zumindest einem solchen empfangenen Symbol Phasenrauschen (PN) und Gaußsches Rauschen (GN) überlagert sind, werden zu zumindest einem solchen empfangenen Symbol (S) sowohl das Phasenrauschen (PN) als auch das Gaußsche Rauschen (GN) bestimmt oder abgeschätzt werden. Vorteilhaft wird dies dadurch, dass beim Bestimmen oder Abschätzen des Phasenrauschens (PN) und des Gaußschen Rauschens (GN) zwischen dem Phasenrauschen (PN) und dem Gaußschen Rauschen unterschieden wird und ein Ergebnis des unterscheidenden Bestimmens oder Abschätzens zur Regelung von Empfangsparametern für Entscheidungen nachfolgend empfangener Symbole (S) verwendet wird. Insbesondere findet dabei eine Orthogonalisierung der gemessenen Werte des Phasenrauschens (PN) auf das Gaußsche Rauschen (GN) statt.

FIG 1

EP 2 063 597 A2

**Beschreibung**

Die Erfindung bezieht sich auf ein Verfahren und eine Schaltungsanordnung zum Entscheiden eines Symbols beim Empfang von mit einem Quadratursignalpaar gekoppelten empfangenen Symbolen mit den oberbegrifflichen Merkmalen gemäß Patentanspruch 1 bzw. 11.

Abhängig vom verwendeten Modulationsverfahren, z.B. QAM (Quadratur-Amplituden-Modulation), ist in einer von einem Quadratursignalpaar aufgespannten Ebene bei einem solchen Verfahren bzw. in einer solchen Schaltungsanordnung jedes Symbol einem bestimmten Sollpunkt einer Vielzahl von Sollpunkten fest zugeordnet. Jeder der Vielzahl der Sollpunkte ist dabei in polaren Koordinaten einem Sollwinkel und einem Sollradius einer Vielzahl von Sollwinkeln und Sollradien zugeordnet, wobei auf jedem der Vielzahl von Sollradien üblicherweise mindestens ein solcher der Sollpunkte liegt. Zu einem Empfangspunkt eines solchen empfangenen Symbols kann somit ein entsprechend zugeordnetes Symbol des verwendeten Modulationsverfahrens entschieden werden.

In der Realität sind solche empfangenen Symbolen jedoch durch Phasenrauschen und additives bzw. Gaußsches Rauschen überlagert, was die Entscheidbarkeit des zugeordneten Symbols nicht immer möglich macht.

EP 1 201 066 B1 verbessert die Situation durch die Annahme, dass aus einem solchen empfangenen Symbol sowohl das Phasenrauschen als auch das Gaußsche Rauschen bedingt bestimmt oder abgeschätzt werden können. Dazu werden Signale, welche äußeren Symbolen des Alphabets des verwendeten Modulationsverfahrens zugeordnet sind, zur Messung des Phasenrauschens verwendet.

Signale, welche inneren Symbolen des Modulationsalphabets zugeordnet sind, werden zur Messung des additiven Gaußschen Rauschens verwendet. Die daraus resultierenden Messwerte sind jedoch nur bedingt zur vollständigen Korrektur des Rauschens geeignet, da Signale mit großem Radius auch durch das Gaußsche Rauschen beeinflusst werden und Signale mit kleinem Radius auch durch Phasenrauschen gestört werden.

EP 1 523 144 A2 beschreibt allgemein eine Schaltungsanordnung, bei welcher ein empfangenes Signal aus dem kartesischen Koordinatenraum in Polarkoordinaten umgesetzt wird, um mittels eines Entscheiders Symbole im Raum der Polarkoordinaten zu entscheiden. Unter anderem wird dabei ein Wichtungsfaktor zur Wichtung eines Radiusfehlers und/oder ein Wichtungsfaktor zur Wichtung eines Winkelfehlers bzw. Phasenfehlers zur Wichtung von Radius- und Phasenfehlern verwendet.

EP 1 523 146 A2 beschreibt allgemein eine Schaltungsanordnung, in welcher ein geschätzter Phasendrehwinkel bestimmt wird, indem ein Integral ausgesuchter plausibler Winkeldifferenzen gebildet wird.

Die Aufgabe der Erfindung besteht darin, ein Verfahren bzw. eine Schaltungsanordnung vorzuschlagen, welche zum Entscheiden eines Symbols beim Empfang eines Eingangssignals mit mit einem Quadratursignal gekoppelten empfangenen Symbolen den Einfluss von Phasenrauschen und Gaußschem Rauschen reduzieren, vorzugsweise in einem solchen Maße reduzieren, dass unter allen Bedingungen von additivem Gaußschen Rauschen und Phasenrauschen, die theoretisch noch einen Empfang zulassen, eine Symbolentscheidung ermöglicht wird.

Diese Aufgabe wird durch ein Verfahren mit den Merkmalen des Patentanspruchs 1 bzw. eine Schaltungsanordnung mit den Merkmalen des Patentanspruchs 11 gelöst. Vorteilhafte Ausgestaltungen sind Gegenstand von abhängigen Ansprüchen.

Bevorzugt wird demgemäss ein Verfahren zum Entscheiden eines Symbols beim Empfang eines Eingangssignals mit mit einem Quadratursignalpaar gekoppelten empfangenen Symbolen. Dabei sind zumindest einem solchen empfangenen Symbol Phasenrauschen und Gaußsches Rauschen überlagert, wobei zu zumindest einem solchen empfangenen Symbol sowohl das Phasenrauschen als auch das Gaußsche Rauschen bestimmt oder abgeschätzt werden. Beim Bestimmen oder Abschätzen des Phasenrauschens und des Gaußschen Rauschens wird zwischen dem Phasenrauschen und dem Gaußschen Rauschen unterschieden bzw. diskriminiert und ein Ergebnis des unterscheidenden Bestimmens oder Abschätzens wird zur Regelung von Empfangsparametern für Entscheidungen nachfolgend empfangener Symbole verwendet.

Erzielbar ist so das Bestimmen von Symbolen unter im Idealfall allen Bedingungen von additivem bzw. Gaußschem Rauschen und Phasenrauschen, die theoretisch gerade noch einen Empfang zulassen, sofern auch eine entsprechend fein einstellbare Regelung umgesetzt wird. Zum Abschätzen des Gaußschen Rauschens und des Phasenrauschens werden dabei insbesondere die verbleibenden oder hochfrequenten Anteile der Amplitudenschwankungen bzw. der Phasenschwankungen verwendet.

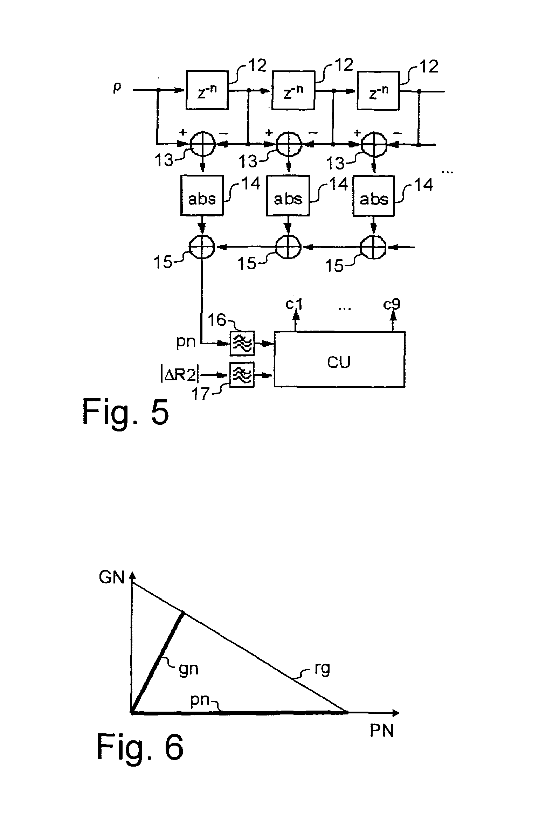

Ausgegangen wird somit von dem Ansatz, dass Gaußsches Rauschen und Phasenrauschen getrennt gemessen werden sollen, wobei die zur Verfügung stehenden Messwerte die Rauschgrößen nicht exakt ab bilden, wie aus Fig. 6 ersichtlich ist, denn wenn Gaußrauschen angelegt wird, dann erscheint eine Kurve mit Messwerten des Gaußschen Rauschens. Das heißt, es wird neben Gaußschem Rauschen, das von außen z.B. thermisch... zugeführt wird, fälschlicherweise etwas Phasenrauschen, das z.B. vom Tuner verursacht wird, gemessen. Amplitudenschwankungen als Messwerte gn können gemessen werden und werden nur durch das Gaußsche Rauschen GN verursacht. Phasenschwankungen als weitere Messwerte pn können gemessen werden und werden durch Phasenrauschen PN und ein wenig durch Gaußrauschen verursacht. Es gilt somit

$$GN = gn$$

und

$$pn = PN + alpha\ GN,$$

wobei alpha das Übersprechen des Gaußrauschens auf die Messung der Phasenschwankungen ist. Vorliegend wird diese Erkenntnis ausgenutzt und mathematisch veranschaulicht

$$PN = pn - alpha\ GN$$

gebildet.

Zum unterscheidenden Bestimmen oder Abschätzen des Phasenrauschens und des Gaußschen Rauschens wird bevorzugt ein solches empfangenes Symbol mittels eines bereits geschätzten Phasendrehwinkels phasenkorrigierend gedreht und einem kartesisch entscheidenden ersten Entscheider und einem polar entscheidenden zweiten Entscheider angelegt zum Bestimmen jeweils eines ersten bzw. zweiten Phasenfehlers und/oder eines ersten bzw. zweiten Radienfehlers. So können durch den ersten Entscheider sowohl der erste Phasenfehler als auch der erste Radienfehler auf Basis einer kartesischen Entscheidung abgeschätzt werden und durch den zweiten Entscheider sowohl der zweite Phasenfehler als auch der zweite Radienfehler auf Basis einer polaren Entscheidung abgeschätzt werden. Dies ermöglicht eine kleinstufige oder sogar stufenlose Regelung der Empfangsparameter.

Unter einem kartesisch entscheidenden Entscheider wird insbesondere ein Entscheider verstanden, welcher ein Symbol in kartesischen Koordinaten angelegt bekommt und in diesem kartesischen Koordinatensystem entscheidet. Unter einem polar entscheidenden Entscheider wird insbesondere ein Entscheider verstanden, welcher ein Symbol in polaren Koordinaten angelegt bekommt und in diesem polaren Koordinatensystem entscheidet. Dabei kann der zweite Entscheider ein in Polarkoordinaten rein polar entscheidender Entscheider sein. Bevorzugt wird aber ein kartesischer Entscheider, welcher auch polare Entscheidungen in Polarkoordinaten treffen kann. Eingesetzt werden kann beispielsweise ein kombiniert polar und kartesisch entscheidender Entscheider, wie er für sich genommen aus EP 1523144 A2 bekannt ist, wobei der zweite Entscheider dabei einen polaren mit einem kartesischen Abstand kombiniert.

Zum Bestimmen des Phasendrehwinkels oder einer Phasendifferenz und/oder zum Bestimmen einer Frequenzdifferenz zur Frequenzregelung werden bevorzugt der erste kartesisch bestimmte und der zweite polar bestimmte Phasenfehler gemischt und/oder es wird zwischen dem ersten und dem zweiten Phasenfehler umgeschaltet. Dabei bedeutet mischen insbesondere das gewichtete Addieren den beiden zu mischenden Größen. Im Idealfall kann bereits dadurch ein Phasenrauschen ausreichend gemessen bzw. korrigiert werden ohne eine Korrektur eines zusätzlichen Einflusses des Gaußschen Rauschens vornehmen zu müssen.

Zum Bestimmen eines Radienfehlers als Regelungsgröße für eine Amplitudenkorrektur des Quadratursignalpaars werden bevorzugt der erste kartesisch bestimmte Radienfehler und der zweite polar bestimmte Radienfehler gemischt und/oder es wird zwischen dem ersten und dem zweiten Radienfehler umgeschaltet. Dadurch kann ein Gaußsches Rauschen auf einfache Art und Weise gemessen bzw. korrigiert werden, wobei zur Korrektur zwei kartesisch bzw. polar, d.h. verschieden bestimmte Radienfehler zur Verfügung stehen, was die Schnelligkeit und Genauigkeit einer Einregelung erhöhen lässt.

Nach Bestimmung oder Abschätzen des Gaußschen Rauschens und dessen Korrektur werden besonders bevorzugt im Fall eines verbleibenden Ansprechens des Phasenrauschens nach dessen Bestimmung oder Abschätzen auf das Gaußsche Rauschen mittels einer Steuereinrichtung Messwerte oder bestimmte oder abgeschätzte Werte des Phasenrauschens und des Gaußschen Rauschens orthogonalisiert. Insbesondere werden einerseits der erste oder zweite Phasenfehler oder eine daraus ermittelte Phasendifferenz zu andererseits dem ersten oder zweiten Radienfehler oder zu einem daraus bestimmten Radienfehler orthogonalisiert. Eine solche Orthogonalisierung kann mittels der Steuereinrichtung insbesondere durch Subtraktion der Messwerte bzw. durch Lösung eines entsprechenden linearen Gleichungssystems durchgeführt werden.

Ausgenutzt wird somit die Erkenntnis, dass die Messwerte zur Rauschanteilbestimmung einerseits des Phasenrauschens und andererseits des Gaußschen Rauschens bzw. daraus gewonnene Größen weder in der Ebene der kartesischen Koordinaten noch in der Ebene der Polarkoordinaten orthogonal aufeinander stehen und eine Orthogonalisierung entsprechend eine verbesserte Korrektur des Rauscheinflusses ermöglicht.

Das Gaußsche Rauschen wird bevorzugt durch eine Entscheidung auf Basis einer Radialdifferenz einer Radialkomponente des empfangenen Symbols bestimmt oder abgeschätzt. Dazu können vorteilhaft eine Schaltungsanordnung und Verfahrensweise oder Aspekte aus deren Beschreibung eingesetzt werden, welche aus EP 1 523 144 A2 für sich genommen bekannt sind. Einbezogen hier wird daher insbesondere auch die Offenbarung der EP 1 523 144 A2 zur ergänzenden Erläuterung.

Zum Bestimmen oder Abschätzen des Phasenrauschens werden bevorzugt nur auf zumindest einem äußeren Radius empfangene oder entschiedene Symbole verwendet oder empfangene oder entschiedene Symbole auf zumindest einem äußeren Radius werden stärker gewichtet verwendet als empfangene oder entschiedene Symbole auf zumindest einem inneren Radius. Eine solche Verfahrensweise ist zwar für sich genommen bekannt, verbessert aber die Bestimmung der Rauschanteile auf einfache Art und Weise.

Zum Bestimmen oder Abschätzen des Phasenrauschens wird bevorzugt ein Gang eines Phasendrehwinkels verwendet, insbesondere verfolgt, wobei der Phasendrehwinkel einer Drehung eines Koordinatensystems eines Entscheiders zum Entscheiden des Symbols relativ zu einem Koordinatensystem des Eingangssignals entspricht. Eine einfache Verfahrensweise besteht dazu darin, den Phasendrehwinkel durch eine Integration von Phasendifferenzen und/oder Winkelabweichungen zu bestimmen bzw. zu verfolgen.

Gemäß einer demgegenüber verbesserten Ausführungsvariante wird der Phasendrehwinkel bestimmt durch ein Integral ausgesuchter bzw. plausibler Winkeldifferenzen, wie dies für sich genommen aus EP 15 23 146 A2 bekannt ist. Einbezogen wird hier daher insbesondere auch die Offenbarung der EP 1 523 146 A2 zur ergänzenden Erläuterung.

Zur Integralbildung werden bevorzugt zueinander benachbarte Winkeldifferenzen des Phasendrehwinkels mit einer einfachen Verzögerung aufaddiert. Eine solche Verfahrensweise ist einfach umsetzbar und verbessert bereits die Bestimmung der Rauschanteile auf einfache Art und Weise. Zur Integralbildung können aber auch Winkeldifferenzen des Phasendrehwinkels mit einer mehrfachen Verzögerung um zueinander beabstandete Winkeldifferenzen aufaddiert werden. Durch die größere Verzögerung kann eine weitere Verbesserung der Bestimmung der Rauschanteile erzielt werden, wenn das Gaußsche Rauschen sich zu stark auf das Phasenrauschen auswirkt, da die entsprechende Schaltung dadurch gegen das Gaußsche Rauschen unempfindlicher wird.

Vorteilhaft ist insbesondere eine Kombination der verschiedenen Verfahrensweisen. Sollte die Orthogonalisierung bzw. Diagonalisierung zur Korrektur des Messwerts des Phasenrauschens mit den direkten Messwerten nicht ausreichen, können zur Evaluierung auch mehr als zwei Eingangsgrößen verwendet werden, wie z.B. die absoluten Differenzen des aus plausiblen Winkelabweichungen gewonnenen Phasendrehwinkels zwischen großen Verzögerungen und mit einem großen Radius gewichteten Winkelabweichungen. Erforderlich ist lediglich das entsprechende Wichten von Symbolen und/oder das Lösen eines entsprechend modifizierten oder erweiterten Gleichungssystems durch die Steuereinrichtung.

Eigenständig vorteilhaft ist eine Schaltungsanordnung, welche das Durchführen eines solchen Verfahrens ermöglicht. Bevorzugt wird dementsprechend eine Schaltungsanordnung zum Entscheiden eines Symbols beim Empfang eines Eingangssignals mit mit einem Quadratursignalpaar gekoppelten empfangenen Symbolen, wobei zumindest einem solchen empfangenen Symbol Phasenrauschen und Gaußsches Rauschen überlagert sind. Dabei weist die Schaltungsanordnung eine Anordnung und/oder Steuerung zum Bestimmen oder Abschätzen sowohl des Phasenrauschens als auch des Gaußschen Rauschens des zumindest eines solchen empfangenen Symbols und eine Regelungsanordnung und/oder Regelungssteuerung zum Regeln von Empfangsparametern für Entscheidungen nachfolgend empfangener Symbole auf. Vorteilhaft wird die Schaltungsanordnung dadurch, dass die Anordnung und/oder Steuerung zum Bestimmen oder Abschätzen sowohl des Phasenrauschens als auch des Gaußschen Rauschens ausgelegt oder gesteuert ist das Bestimmen oder Abschätzen des Phasenrauschens und des Gaußschen Rauschens zwischen dem Phasenrauschen und dem Gaußschen Rauschen unterscheidend durchzuführen, und mit der Regelungsanordnung und/oder Regelungssteuerung verbunden ist zum Anlegen eines Ergebnisses des unterscheidenden Bestimmens oder Abschätzens an die Regelungsanordnung und/oder Regelungssteuerung zur Regelung der Empfangsparametern.

Zum unterscheidenden Bestimmen oder Abschätzen des Phasenrauschens und des Gaußschen Rauschens ist die Schaltungsanordnung bevorzugt ausgestattet mit einem Rotator zum phasenkorrigierenden Drehen eines solchen empfangenen Symbols mittels eines insbesondere bereits geschätzten Phasendrehwinkels, mit einem dem Rotator nachgeschalteten kartesisch entscheidenden ersten Entscheider, der zum Bestimmen eines ersten Phasenfehlers und/oder eines ersten Radienfehlers ausgestaltet und/oder programmiert ist, und mit einem dem Rotator nachgeschalteten und zumindest polar entscheidenden zweiten Entscheider, der zum Bestimmen eines zweiten Phasenfehlers und/oder eines zweiten Radienfehlers ausgestaltet und/oder programmiert ist.

Bevorzugt ist die Schaltungsanordnung ausgestattet mit einem Umschalter und/oder Mischer, der ausgestaltet und/oder programmiert ist zum Bestimmen des Phasendrehwinkels oder einer Phasendifferenz den ersten kartesisch bestimmten und den zweiten polar bestimmten Phasenfehler zu mischen und/oder zwischen dem ersten und dem zweiten Phasenfehler umzuschalten und zum Ausgeben einer Phasendifferenz für ein Phasenregelungsmodul einer Phasenregelschleife. Bevorzugt ist die Schaltungsanordnung zusätzlich oder alternativ ausgestattet mit einem Umschalter und/oder Mischer, der ausgestaltet und/oder programmiert ist und/oder zum Bestimmen einer Frequenzdifferenz zur Frequenzregelung den ersten kartesisch bestimmten und den zweiten polar bestimmten Phasenfehler zu mischen und/oder zwischen dem ersten und dem zweiten Phasenfehler umzuschalten und zum Ausgeben einer Phasendifferenz für ein Frequenzregelungsmodul einer Frequenzregelschleife.

Bevorzugt ist die Schaltungsanordnung ausgestattet mit einer Anordnung zum Bestimmen eines Radienfehlers als Regelungsgröße für ein Amplitudenkorrekturmodul zum Korrigieren des Gaußschen Rauschens des Quadratursignalpaars, aufweisend einen Umschalter und/oder Mischer, der ausgestaltet und/oder programmiert ist zum Bestimmen des Radienfehlers den ersten kartesisch bestimmten Radienfehler und den zweiten polar bestimmten Radienfehler zu mischen und/oder zwischen dem ersten und dem zweiten Radienfehler umzuschalten.

Bevorzugt ist die Schaltungsanordnung ausgestattet mit einer Steuereinrichtung, die ausgestaltet und/oder programmiert ist nach Bestimmung oder Abschätzen des Gaußschen Rauschens und dessen Korrektur im Fall eines verbleibenden Ansprechens des Phasenrauschens nach dessen Bestimmung oder Abschätzen auf das Gaußsche Rauschen Messwerte oder bestimmte oder abgeschätzte Werte des Phasenrauschens und des Gaußschen Rauschens zu orthogonalisieren, insbesondere einerseits den ersten oder zweiten Phasenfehler oder eine daraus ermittelte Phasendifferenz zu andererseits dem ersten oder zweiten Radienfehler oder einem daraus bestimmten Radienfehler zu orthogonalisieren. Die Steuereinrichtung ist vorzugsweise in einer entsprechenden Schaltung integriert, kann aber auch als externe Steuereinrichtung ausgestaltet sein.

Bevorzugt wird die Schaltungsanordnung zum Bestimmen oder Abschätzen des Phasenrauschens mit einer Verzögerungsanordnung, die ausgestaltet und/oder programmiert ist einen Gang eines Phasendrehwinkels mittels in Reihe geschalteter Verzögerungsglieder zu verfolgen, wobei jeweils ein Subtraktionsglied zum Bilden einer Differenz zwischen Eingang und Ausgang eines diesem zugeordneten der Verzögerungsglieder geschaltet ist, und wobei die Verzögerungsanordnung geschaltet oder programmiert ist eine Summe von Betragswerten dieser Differenzen als Maß für das Phasenrauschen an eine Steuereinrichtung anzulegen.

Bevorzugt ist die Schaltungsanordnung ausgestaltet, programmiert und/oder verwendet zum Durchführen eines solchen Verfahrens.

Insbesondere werden gemäß der besonders bevorzugten Schaltungsanordnung bzw. Verfahrensweise zwei Maßnahmen durchgeführt, nämlich erstens eine Messung, welche zwischen den beiden Rauscharten unterschieden und Messwerte gegebenenfalls orthogonalisiert, und zweitens eine kleinstufige oder stufenlose Regelung der Empfangsparameter.

Ein Ausführungsbeispiel wird nachfolgend anhand der Zeichnung näher erläutert. Es zeigen:

Fig. 1 eine Schaltungsanordnung mit beispielhaften Komponenten zum Entscheiden eines Symbols beim Empfang eines Eingangssignals, wobei empfangene Symbole mit einem Quadratursignalpaar gekoppelt sind und solche empfangenen Symbole mit Phasenrauschen und Gaußschem Rauschen überlagert sind,

Fig. 2 eine schematische Darstellung einer Empfangsgrenze mit verschiedenen Parametersätzen eines Empfängers für Gaußsches Rauschen gegenüber Phasenrauschen,

Fig. 3 schematisch eine Steuereinrichtung einer Schaltungsanordnung gemäß Fig. 1 mit beispielhaft einsetzbaren Eingabewerten,

Fig. 4 eine komplexwertige Ebene des Quadratursignalpaares mit Sollradien und durch Phasenrauschen bedingten Empfangsbereichen für empfangene Symbole,

Fig. 5 eine Verzögerungsanordnung zum Bestimmen eines Maßes für das Phasenrauschen und

Fig. 6 eine Darstellung zur Veranschaulichung des Einflusses von Gaußschem Rauschen auf das Phasenrauschen.

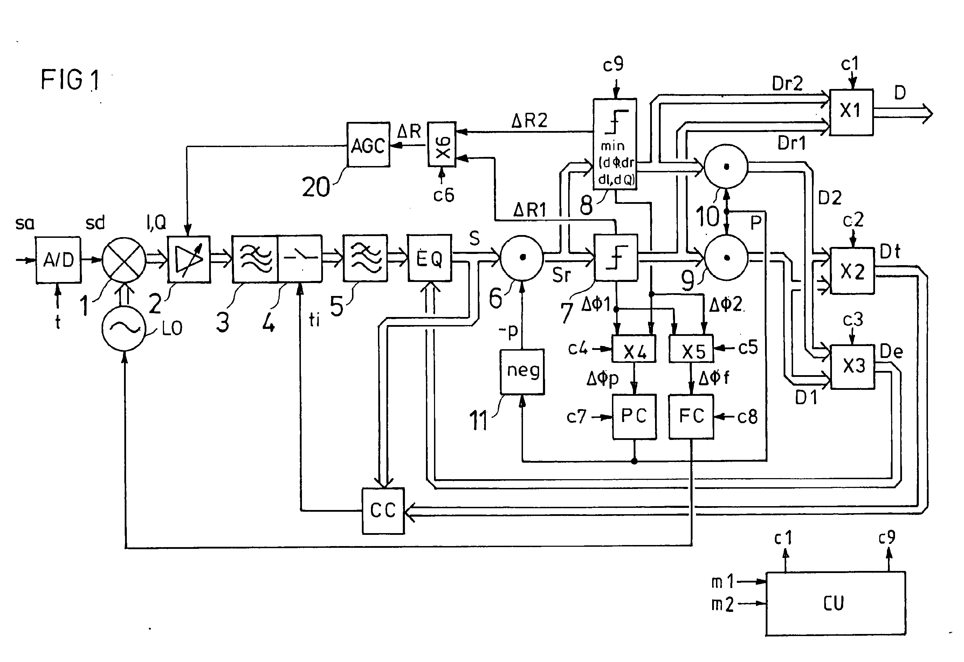

Fig. 1 zeigt eine beispielhafte Schaltungsanordnung, bei welcher als einleitender Komponente einem Analog-/Digital-Umsetzer A/D, welchem ein Taktsignal t angelegt ist, ein empfangenes analoges Empfangssignal sa eingegeben wird. Der Analog-/Digital-Umsetzer A/D wandelt das analoge Empfangssignal sa in ein digitalisiertes bzw. digitales Signal sd um. Das digitale Signal sd wird an einen Quadratur-Umsetzer bzw. Mischer 1 ausgegeben, welcher das digitalisierte bzw. digitale Signal sd ins Basisband umsetzt und es auf die Quadratur-Komponenten des Quadratur-Signalpaares I, Q aufspaltet. Das vom Mischer 1 ausgegebene Signal wird einer Verstärkerregeleinrichtung 2 in für sich bekannter Art und Weise angelegt. Ein von der Verstärkungsregeleinrichtung 2 verstärktes Signal wird einem Tiefpassfilter 3 zugeführt, dessen Ausgangssignal einer Abtasteinrichtung 4 zugeführt wird, an welcher ein Abtasttakt ti zum Abtasten anliegt. Ein mit der Abtasteinrichtung 4 so abgetastetes Signal wird an einen weiteren Tiefpassfilter 5 als Nyquistfilter ausgegeben und von diesem gefiltert und einem Equalizer EQ (deutsch: Entzerrer) angelegt.

Der Equalizer EQ gibt empfangene Signalwerte bzw. empfangene Symbole S an einen Rotator 6 aus, welchem ein geschätzter Phasendrehwinkel -p zusätzlich angelegt ist. Mittels des geschätzten Phasendrehwinkels -p wird aus den empfangenen Symbolen S durch eine entsprechende Rotation mit dem geschätzten Phasendrehwinkel eine Abfolge um den jeweils geschätzten Phasendrehwinkel -p korrigierend gedrehter empfangener Symbole Sr erzeugt und vom Rotator 6 ausgegeben.

Die gedrehten empfangenen Symbole Sr werden sowohl einem ersten Entscheider 7, welcher auf Basis kartesischer Koordinaten eine Entscheidung bewirkt, als auch einem zweiten bzw. weiteren Entscheider 8, welcher eine Entscheidung auf Basis insbesondere auch von Polarkoordinaten trifft, angelegt. Der erste Entscheider 7 entscheidet zu dem jeweils anliegenden gedrehten empfangenen Symbol Sr entsprechend ein phasenkorrigierend gedrehtes und kartesisch entschiedenes Symbol Dr1 und gibt dieses aus. Der zweite Entscheider 8 erzeugt zu dem jeweils anliegenden gedrehten empfangenen Symbol Sr entsprechend ein phasenkorrigierend gedrehtes und polar entschiedenes zweites Symbol Dr2 und gibt dieses aus.

Als zweiter Entscheider 8 kann zur polaren Entscheidung insbesondere auch ein Entscheider eingesetzt werden, welcher zunächst eine kartesische Hilfsentscheidung durchführt und dabei eine Vielzahl benachbarter Empfangspunkte als Kandidaten für eine endgültige Entscheidung selektiert. Danach werden in dem zweiten derart aufgebauten Entscheider für jeden Kandidaten der Radius- und Phasenfehler berechnet und entsprechend optional einsetzbarer aktueller Einstellungen gewichtet. Der Punkt mit dem geringsten gewichteten Fehler wird dann als entschiedenes zweites Symbol Dr2 ausgegeben. Idealerweise werden in einem solchen zweiten Entscheider 8 die gewichteten Fehler für alle möglichen Empfangspunkte berechnet, um den besten Punkt auszuwählen, wobei jedoch auch eine begrenzte Anzahl benachbarter Punkte zur Abschätzung des entschiedenen zweiten Symbols Dr2 zur Reduzierung des Berechnungsaufwands betrachtet werden kann.

Dargestellt ist beispielhaft eine Anordnung aus einem einzigen Rotator 6, welcher auf Basis kartesischer Koordinaten die Drehung der empfangenen Symbole S vornimmt, wozu dann eine komplexe Multiplikation inklusive einer Bestimmung des Sinus und des Kosinus des Phasendrehwinkels p vorzunehmen ist. Alternativ kann die Drehung durch eine einfache Winkeladdition auch in Polarkoordinaten erfolgen.

Die derart von den beiden Entscheidern 7, 8 phasenkorrigierend gedrehten, entschiedenen Symbole Dr1, Dr2 werden einem Umschalter X1 angelegt, welcher ein entschiedenes Symbol D ausgibt. Das entschiedene Symbol D wird an weitere Schaltungen zur weiteren Datenverarbeitung ausgegeben, wie dies für sich genommen bekannt ist. Durch eine Umschaltung des Datenausgangs des Umschalters X1 wird als das entschiedene Symbol D entsprechend das phasenkorrigierend gedrehte und kartesisch entschiedene erste Symbol Dr1 des ersten Entscheiders 7 oder alternativ das phasenkorrigierend gedrehte und polar entschiedene zweite Symbol Dr2 des zweiten Entscheiders ausgegeben. Die derart ausgegebenen Daten bzw. entschiedenen Symbole D können beispielsweise in einem Fehlerkorrekturblock weiterverarbeitet werden. Die Umschaltung in dem Umschalter X1 erfolgt durch ein Steuersignal c1, welches von einer Steuereinrichtung CU ausgegeben wird. Die Steuereinrichtung CU ist vorteilhaft integraler Bestandteil der Schaltungsanordnung, kann prinzipiell aber auch durch eine externe Steuereinrichtung umgesetzt werden.

Die phasenkorrigierend gedrehten und kartesisch bzw. polar entschiedenen ersten bzw. zweiten Symbole Dr1, Dr2 werden außerdem jeweils einem weiteren Rotator 9 bzw. 10 angelegt, welche eine Rückdrehung um den geschätzten Phasendrehwinkel p durchführen und entsprechend ein kartesisch zurückgedrehtes bzw. nicht phasenkorrigiertes erstes entschiedenes Symbol D1 bzw. ein polar zurückgedrehtes bzw. nicht phasenkorrigiertes zweites entschiedenes Symbol D2 ausgeben.

Die beiden zurückgedrehten Symbole D1, D2 werden beide einem weiteren Umschalter und/oder Mischer X2 angelegt, welchem von der Steuereinrichtung CU zusätzlich ein entsprechendes Steuersignal c2 angelegt wird. Abhängig vom angelegten Steuersignal c2 bewirkt der Umschalter und/oder Mischer X2 eine Umschaltung oder Mischung der derart zurückgedrehten entschiedenen Symbole D1, D2 und gibt ein Taktsteuer-Symbol Dt aus. Das Taktsteuer-Symbol Dt bzw. eine entsprechende Abfolge der Taktsteuer-Symbole Dt wird in für sich bekannter Art und Weise zur weiteren Verarbeitung einem Korrelator CC zur Bestimmung der Symbolrate und Symbolphase zur Steuerung des Analog/Digital-Wandlers und/oder eines Abtastratenwandlers bzw. der Abtasteinrichtung 4 angelegt. Dem Korrelator CC wird außerdem in für sich bekannter Art und Weise die Abfolge der empfangenen Symbole S angelegt. Bei der dargestellten Ausführungsform wird durch den Korrelator CC entsprechend und der Abtasttakt ti erzeugt und an den Analog-/Digital-Umsetzer A/D bzw. an die Abtasteinrichtung 4 angelegt. Alternativ kann das Taktsignal ti auch den Analog/Digital-Wandler A/D steuern, wobei dann die Abtastratenumwandlung in der Abtasteinrichtung 4 nicht erforderlich ist.

Die beiden zurückgedrehten Symbole D1, D2 werden außerdem einem weiteren Umschalter und/oder Mischer X3 angelegt. Mittels eines von der Steuereinrichtung CU bereitgestellten weiteren Steuersignals c3, welches an diesem Umschalter und/oder Mischer X3 anliegt, wird entsprechend dem Signalzustand eine Umschaltung oder Mischung der beiden zurückgedrehten Symbole D1, D2 zur Erzeugung des Equalizer-Steuersymbols De zur weiteren Verarbeitung in dem Equalizer EQ sowohl zur Erzeugung einer Fehlerspannung für einen so genannten Feed-Forward-Equalizer (vorwärtsgerichteter Equalizer) und einen Decision-Feedback-Equalizer (entscheidungsrückgekoppelter Equalizer) als auch für die notwendigen entschiedenen Symbole für den Decision-Feedback-Equalizer durchgeführt. Durch diesen Umschalter und/oder Mischer X3 wird entsprechend ein Equalizer-Steuersymbol De zur Steuerung des Equalizers EQ abhängig von dem Steuersignal c3 und den beiden anliegenden kartesisch bzw. polar zurückgedrehten Symbolen D1 bzw. D2 bereitgestellt.

Der erste Entscheider 7 stellt außerdem einen im ersten Entscheider 7 kartesisch entschiedenen Phasenfehler $\Delta\Phi1$ zwischen dem momentan anliegenden gedrehten empfangenen Symbol Sr und dem daraus phasenkorrigierend gedrehten und kartesisch entschiedenen Symbol Dr1 bereit. Der zweite Entscheider 9 stellt außerdem einen im ersten Entscheider 7 polar entschiedenen Phasenfehler ΔΦ2 zwischen dem momentan anliegenden gedrehten empfangenen Symbol Sr und dem daraus phasenkorrigierend gedrehten und kartesisch entschiedenen Symbol Dr2 bereit.

Die beiden entschiedenen Phasenfehler ΔΦ1, ΔΦ2 werden einem noch weiteren Umschalter und/oder Mischer X4 angelegt. Abhängig von einem noch weiteren Steuersignal c4, welches durch die Steuereinrichtung CU bereitgestellt wird, führt dieser Umschalter und/oder Mischer eine Umschaltung oder Mischung der Phasenfehler ΔΦ1, ΔΦ2 oder der entschiedenen Phasen durch und gibt eine selektierte Phasendifferenz ΔΦp für eine Phasenregelungsschleife aus. Die selektierte Phasendifferenz ΔΦp wird zur weiteren Verarbeitung einem Phasenregelungsmodul PC angelegt, welches durch ein noch weiteres Steuersignal c7 über die Steuereinrichtung CU angesteuert wird. Das Phasenregelungsmodul PC dient zur Definition bzw. Bereitstellung der Koeffizienten des Plausibilitätsfilters zur Steuerung des Kipp- bzw. Phasendrehwinkels p. Der Phasendrehwinkel p wird, wie beschrieben, zum Drehen der empfangenen Symbole S bzw. zum Zurückdrehen der entschiedenen Symbole Dr1, Dr2 verwendet.

Die selektierte Phasendifferenz ΔΦp wird somit zur weiteren Verarbeitung in einem Block zur Phasendrehung der Signale bzw. Symbole S vor den Entscheidern 7, 8 und für eine Gegendrehung der entschiedenen Symbole Dr1, Dr2 oder der Fehlerspannungen aus den Entscheidern 7, 8 unabhängig davon verwendet, ob sich der Rotator 6 vor oder hinter einem Nyquist-Filter, dem Feed-Forward-Equalizer oder dem Decision-Feedback-Equalizer befindet. Unabhängig ist dies auch davon, ob sich der Gegenrotator oder die Gegenrotatoren vor oder nach den vorstehend genannten Umschaltern oder Mischern X2, X3 befinden, und unabhängig davon, ob entschiedene Symbole oder äquivalent dazu Fehlerspannungen gedreht werden.

Die beiden kartesisch bzw. polar entschiedenen Phasenfehler ΔΦ1, ΔΦ2 werden zusätzlich einem weiteren Umschalter und/oder Mischer X5 angelegt, welcher von der Steuereinrichtung CU mittels eines weiteren Steuersignals c5 angesteuert wird. Durch das Steuersignal c5 wird je nach Signalzustand eine Umschaltung oder Mischung der beiden kartesisch bzw. polar entschiedenen Phasenfehler ΔΦ1, ΔΦ2 oder äquivalent dazu der entschiedenen Phasen bewirkt und entsprechend eine selektierte Frequenzdifferenz ΔΦf für eine Frequenzregelungsschleife ausgegeben. Die selektierte Frequenzdifferenz ΔΦf wird einem Frequenzregelungsmodul FC angelegt, welche ein Steuersignal für einen Lokal-Oszillator LO bereitstellt. Der Lokal-Oszillator LO gibt zwei um 90° versetzte Träger an den Mischer 1 aus, so dass der Mischer 1 das digitale Signal sd zur Bereitstellung der beiden Quadratur-Komponenten I, Q erhält. Die Steuerung des Frequenzregelungsmoduls FC erfolgt durch ein weiteres Steuersignal c8 über die Steuereinrichtung CU. Dieses Steuersignal c8 bewirkt eine Steuerung der Parameter des Frequenzsteuerblocks bzw. Frequenzregelungsmoduls FC, insbesondere eine Steuerung der Filter-Koeffizienten eines darin integrierten PI-Filters zur Regelung der Frequenz des Lokal-Oszillators LO.

Der erste Entscheider 7 gibt außerdem einen ersten, im kartesischen Entscheider 7 entschiedenen Radienfehler ΔR1 als Differenz der Beträge des gedrehten empfangenen Signals Sr und des vom ersten Entscheider 7 entschiedenen Symbols Dr1 aus. Entsprechend gibt der zweite Entscheider 8 einen zweiten, in diesem polar entschiedenen Radiusfehler als Differenz der Beträge des empfangenen gedrehten Symbols Sr und des vom zweiten Entscheider 8 entschiedenen Symbols Dr2 aus. Die beiden entschiedenen Radienfehler ΔR1, ΔR2 werden einem weiteren Umschalter und/oder Mischer X6 angelegt. Dieser Umschalter und/oder Mischer X6 gibt abhängig von einem durch die Steuereinrichtung CU angelegten weiteren Steuersignal c6 einen Radienfehler ΔR durch eine Umschaltung oder Mischung der beiden entschiedenen Radienfehler ΔR1, ΔR2 oder äquivalent dazu entsprechend entschiedener Radien zur weiteren Verarbeitung in einer Schaltung zur Amplitudenregelung aus. Insbesondere wird von diesem Umschalter und/oder Mischer der durch Umschaltung oder Mischung erhaltene Radienfehler ΔR an ein Amplituden-Korrekturmodul 20 ausgegeben, welches beispielsweise eine automatische Verstärkungssteuerung bzw. AGC-Regelung AGC durch eine entsprechende Bereitstellung eines Steuersignals für die Verstärkungsregeleinrichtung 2 durchführt.

Gemäß der besonders bevorzugten Ausgestaltung gibt die Steuereinrichtung CU außerdem ein weiteres Steuersignal c9 aus, welches zur Steuerung der Parameter des auch im Polarkoordinatensystem wirkenden zweiten Entscheiders 8 an diesen angelegt wird. Mittels dieses Steuersignals c9 wird eine Steuerung insbesondere des der Abstandsentscheidung zugrundeliegenden Additionsverhältnisses des Phasenfehlers ΔΦ und des Radiusfehlers ΔR sowie gegebenenfalls einer Beimischung von kartesischen Abweichungen bewirkt.

Die Steuereinrichtung CU kann insbesondere mit einer Tabelle oder mit verschiedenen Tabellen für die verschiedenen zu steuernden Blöcke, mit einer Gleichung, welche das Verhältnis von Gaußschem Rauschen zu Phasenrauschen bestimmt, mit vielen derartigen Gleichungen oder mit einer Kombination derartigen Mitteln ausgestattet oder programmiert sein und arbeiten. Die Kontrollparameter bzw. Steuersignale c1, c2, ..., c9 der Steuereinrichtung CU können gleichzeitig oder unabhängig voneinander bereitgestellt werden und entsprechend gleichzeitig oder unabhängig voneinander die jeweils angesteuerten Komponenten ansteuern. Insbesondere können die Steuersignale c1, ..., c9 jeweils zwei Positionen für Gaußsches Rauschen bzw. Phasenrauschen oder vorteilhafter noch mehr Positionen vorsehen. Insbesondere für eine Mischung anstelle eines Umschaltens kann für die entsprechenden Komponenten bzw.

Mischer jeweils auch ein Steuersignal c1, ..., c9 bereitgestellt werden, welches vorteilhaft eine kontinuierliche Regelung ermöglicht.

Einsetzbar ist eine derartige Schaltungsanordnung insbesondere in Verbindung mit komplexen digitalen Modulationsverfahren wie QAM. Einsatzmöglichkeiten ergeben sich insbesondere im Rahmen neuerer Rundfunk-, Fernseh- und Datendienste über Kabel und zum Teil auch über terrestrische Übertragungen.

Soweit Fehlerspannungen beschrieben sind, werden diese, soweit nicht anders angegeben, durch die Differenz des jeweils angelegten Signals vor dem Entscheider 7, 8 und dem dazugehörigen entschiedenen Symbol bestimmt.

In der Schaltungsanordnung, welche vorzugsweise als eigenständige Komponente eines Empfängers einsetzbar ist, sind vorzugsweise alle entscheidenden funktionellen Blöcke und Module so ausgestaltet und/ oder programmiert, dass für jede Rauschkombination die best möglichen Empfängerparameter einstellbar sind. Dies geschieht in Abhängigkeit vom Phasenrauschen PN und vom Maß des Gaußschen Rauschens GN. Je mehr Einstellmöglichkeiten mit insbesondere kleinen Schrittweiten oder kontinuierlicher Einstellbarkeit für die einzelnen der Steuerblöcke etc. vorgesehen sind, desto besser wird eine Entscheidung von Symbolen bis in den Grenzbereich des gerade noch möglichen Empfangs bei einem vorgegebenen Verhältnis von dem Phasenrauschen PN und dem Gaußschen Rauschen GN ausnutzbar.

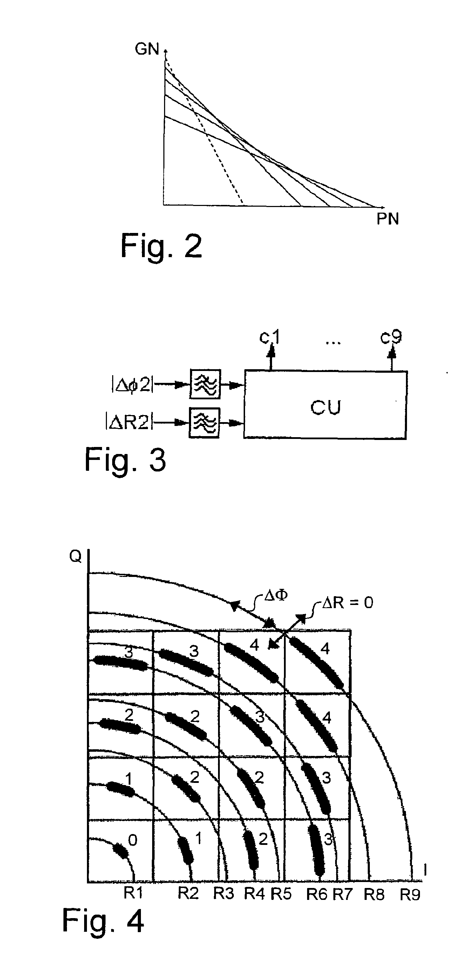

Fig. 2 veranschaulicht schematisch Empfangsgrenzen mit verschiedenen Parametersätzen bei unterschiedlichen Verhältnissen von Gaußschem Rauschen GN gegenüber Phasenrauschen PN. Ein optimaler Parametersatz für Gaußsches Rauschen ist gestrichelt dargestellt.

Messergebnisse des Gaußschen Rauschens GN und des Phasenrauschens PN werden, wie in Fig. 3 skizziert, der Steuereinrichtung CU zugeführt, welche ihrerseits die Parameter bzw. Steuersignale c1,..., c9 für die verschiedenen Empfangsblöcke der Schaltung gemäß Fig. 1 und optional auch weitere Steuersignale erzeugt. Insbesondere werden dazu der Steuereinrichtung CU der im zweiten Entscheider 8 polar entschiedene Phasenfehler $\Delta\Phi2$ und der durch den zweiten Entscheider 8 polar entschiedene Radienfehler $\Delta R2$ über jeweils einen Tiefpassfilter angelegt. Die Steuereinrichtung CU erhält somit Messwerte, insbesondere solche, die sich aus Radius- und Amplitudenabweichungen durch die Entscheidung mittels des polaren Entscheiders ergeben.

Fig. 4 veranschaulicht Sollradien in der kartesischen Ebene des Quadratursignalpaares Q, I mit Symbolpositionen auf Sollradien. Erkennbar ist, dass bei einer Betrachtung in Polarkoordinaten der Phasenfehler bzw. die Winkelabweichung $\Delta\Phi$ keinen Amplitudenfehler erzeugt und der Amplitudenfehler $\Delta R$ bzw. dessen Messgröße bzw. Messwert gn entsprechend ein guter Indikator für Gaußsches Rauschen GN ist. Zur Messung des Phasenrauschens PN kann die Winkelabweichung $\Delta\Phi$ bzw. deren Messwert pn benutzt werden. Die Messgröße dieses Messwerts pn ist allerdings vom additiven Rauschen bzw. Gaußschen Rauschen GN beeinflusst. Eine Multiplikation der Winkelabweichung $\Delta\Phi$ mit Werten aus einer Tabelle, welche die äußeren Radien bevorzugt und die entweder durch die entschiedenen oder nichtentschiedenen Symbole oder durch die entschiedenen oder nichtentschiedenen Radien angesteuert wird, verbessert das Ergebnis. Beispielhafte Wichtungsfaktoren sind den jeweiligen Sollpositionen zugeordnet, wobei beispielhaft ein innerstes Symbol mit dem Faktor 0 und ein Symbol auf den äußeren Radien mit dem Faktor 4 gewichtet wird. Eine solche Multiplikation der Fehlerspannungen mit symbol- oder radiusabhängigen Werten kann wieder auf Basis von Werten einer entsprechenden Tabelle durchgeführt werden.

Alternativ kann zur Messung des Phasenrauschens der Gang des Phasendrehwinkels p verfolgt werden, welcher die Kippung des Koordinatensystems des Entscheiders zu dem des Eingangssignals repräsentiert. In einer einfachen Ausführung ist der Phasendrehwinkel p einfach die Integration der Winkelabweichung $\Delta\Phi$. Gemäß einer verbesserten Ausführung können für das Integral ausgesuchte, insbesondere plausible Winkeldifferenzen nach EP 1 523 146 verwendet werden.

In einer einfachen Anordnung werden die Absolutwerte benachbarter Winkeldifferenzen aufaddiert, wozu ein einfacher Verzögerer $z^{-1}$ verwendet wird.

Eine Verbesserung dieser Methode erhält man dadurch, dass Verzögerungsglieder mit einer größeren Verzögerung $z^{-n}$ verwendet werden. Dadurch wird eine entsprechende Schaltungsanordnung unempfindlicher gegenüber Gaußschem Rauschen. Dargestellt ist eine beispielhafte solche Schaltungsanordnung in Fig. 5. Der Phasendrehwinkel p wird einer Reihenschaltung von Verzögerungsgliedern 12 angelegt, welche jeweils eine vorzugsweise größere oder insbesondere auch einstellbare Verzögerung $z^{-n}$ bewirken. Der Eingang und der Ausgang eines jeden der Verzögerungsglieder 12 ist an ein jeweils zugeordnetes Subtraktionsglied 13 geschaltet, um die Differenz der Ein- und Ausgangswerte eines jeden der Verzögerungsglieder 12 zu bestimmen. Die Differenzen werden von den Subtraktionsgliedern 13 jeweils einem Betragsbildungsglied 14 zur Bildung deren Betrags angelegt. Die dadurch gebildeten Betragswerte werden mittels eines Additionsglieds 15 oder einer Kette von Additionsgliedern 15 aufaddiert, um ein Maß bzw. den Messwert pn für das Phasenrauschen PN zu bestimmen. Dieses wird über einen Tiefpassfilter 16 der Steuereinrichtung CU angelegt, welche zusätzlich einen entsprechenden Amplitudenfehler $\Delta R2$ vom ebenfalls zweiten Entscheider 8 angelegt bekommt.

Sollte der Indikator bzw. Messwert pn, der das Phasenrauschen PN messen soll, noch in gewisser Weise auf Gaußsches Rauschen ansprechen, kann die Steuereinrichtung CU oder eine entsprechend andere geeignete Schaltung die beiden Messwerte durch Subtraktion, insbesondere durch Lösung eines linearen Gleichungssystems, orthogonalisieren.

Fig. 6 zeigt beispielhaft eine Darstellung des Gauß-Rauschens GN über dem Phasenrauschen PN. Der Messwert pn für das Phasenrauschen PN eines Symbols S liegt auf der Abszisse, welche den Anteil des allgemeinen Phasenrauschens PN eines empfangenen Symbols abbildet. Dargestellt ist außerdem ein Messwert gn für Gaußsches Rauschen des Symbols S bis zu einer die beiden Achsen verbindende Linie als einer theoretischen Empfangsgrenze rg. Erkennbar ist, dass das Gaußsche Rauschen auch ein Ansprechen des Indikators für das Phasenrauschen bewirkt. Eine Orthogonalisierung erzeugt entsprechend unabhängige Indikatoren.

Sollte diese Orthogonalisierung noch nicht ausreichen und lassen sich daraus noch keine unabhängigen Messgrößen für das Gaußrauschen und das Phasenrauschen eines empfangenen Symbols S erzielen, oder nicht in ausreichender Auflösung erzielen, können mehr als zwei einfache Messgrößen verwendet werden. So können die Messgrößen mehrerer aufeinanderfolgender Symbole S verwendet werden. Bevorzugt können aber auch aus den Messgrößen eines Symbols S abgeleitete Größen verwendet werden, wie z.B. der Radienfehler $\Delta R$, die absoluten Differenzen der aus plausiblen Winkelabweichungen gewonnene Verkippung bzw. der Phasendrehwinkel p zwischen großen Verzögerungen $z^{-1}$ und die mit dem Radius gewichteten Winkelabweichungen $\Delta\Phi$.

Zum Abschätzen des Gaußschen Rauschens GN und des Phasenrauschens PN werden dabei bevorzugt die verbleibenden oder hochfrequenten Anteile der Amplitudenschwankungen bzw. der Phasenschwankungen herangezogen. Die so gewonnen Messwerte gn bzw. pn sind allerdings nicht ganz unabhängig voneinander. Während die Messung der Amplitudenschwankung als Messwert gn für das Gaußsche Rauschen GN nicht von einem Phasenrauschen PN beeinflusst werden, kann die Messung der Phasenschwankungen bzw. Winkelabweichungen sehr wohl durch Gaußsches Rauschen GN verursacht werden. Es gilt dabei

$$gn = GN$$

und

$$pn = PN + alpha\ GN$$

mit alpha als Variabler des Gleichungssystems. Durch Lösen dieser linearen Gleichung können orthogonale Messgrößen für das Gaußsche Rauschen GN und das Phasenrauschen PN bestimmt werden gemäß

$$GN = gn$$

und

$$PN = pn - alpha\ GN.$$

**Patentansprüche**

1. Verfahren zum Entscheiden eines Symbols (D) beim Empfang eines Eingangssignals mit Symbolen (S), die mit einem Quadratursignalpaar (I, Q) gekoppelt sind, bei dem

   - zumindest einem solchen empfangenen Symbol (S) Phasenrauschen (PN) und Gaußsches Rauschen (GN) überlagert sind und zu zumindest einem solchen empfangenen Symbol (S) sowohl das Phasenrauschen (PN) als auch das Gaußsche Rauschen (GN) bestimmt oder abgeschätzt wird,

   **dadurch gekennzeichnet, dass**

   - beim Bestimmen oder Abschätzen des Phasenrauschens (PN) und des Gaußschen Rauschens (GN) zwischen dem Phasenrauschen (PN) und dem Gaußschen Rauschen unterschieden wird und ein Ergebnis des unterscheidenden Bestimmens oder Abschätzens zur Regelung von Empfangsparametern für Entscheidungen nachfolgend empfangener Symbole (S) verwendet wird.

2. Verfahren nach Anspruch 1, bei dem zum unterscheidenden Bestimmen oder Abschätzen des Phasenrauschens (PN) und des Gaußschen Rauschens (GN) ein solches empfangenes Symbol (S) mittels eines bereits geschätzten Phasendrehwinkels (p) phasenkorrigierend gedreht und einem kartesisch entscheidenden ersten Entscheider (7) und einem polar entscheidenden zweiten Entscheider (8) angelegt wird zum Bestimmen jeweils eines ersten bzw. zweiten Phasenfehlers ($\Delta\Phi1$, $\Delta\Phi2$) und/oder eines ersten bzw. zweiten Radienfehlers ($\Delta R1$, $\Delta R2$).

3. Verfahren nach Anspruch 2, bei dem zum Bestimmen des Phasendrehwinkels (p) oder einer Phasendifferenz ($\Delta\Phi p$) und/oder zum Bestimmen einer Frequenzdifferenz ($\Delta\Phi f$) zur Frequenzregelung der erste kartesisch bestimmte und der zweite polar bestimmte Phasenfehler ($\Delta\Phi1$, $\Delta\Phi2$) gemischt werden und/oder zwischen dem ersten und dem zweiten Phasenfehler ($\Delta\Phi1$, $\Delta\Phi2$) umgeschaltet wird.

4. Verfahren nach Anspruch 2, bei dem zum Bestimmen eines Radienfehlers ($\Delta R$) als Regelungsgröße

für eine Amplitudenkorrektur des Quadratursignalpaars (I, Q) der erste kartesisch bestimmte Radienfehler (ΔR1) und der zweite polar bestimmte Radienfehler (ΔR2) gemischt werden und/oder zwischen dem ersten und dem zweiten Radienfehler (ΔR1, ΔR2) umgeschaltet wird.

**5.** Verfahren nach Anspruch 2 oder 4, bei dem im Fall eines verbleibenden Ansprechens des Phasenrauschens (PN) nach dessen Bestimmung oder Abschätzen auf das Gaußsche Rauschen (GN) nach Bestimmung oder Abschätzen des Gaußschen Rauschens (GN) und dessen Korrektur mittels einer Steuereinrichtung (CU) Messwerte oder bestimmte oder abgeschätzte Werte des Phasenrauschens (PN) und des Gaußschen Rauschens (GN) orthogonalisiert werden, insbesondere einerseits der erste oder zweite Phasenfehler (ΔΦ1, ΔΦ2) oder eine daraus ermittelte Phasendifferenz (ΔΦ) zu andererseits dem ersten oder zweiten Radienfehler (ΔR1, ΔR2) oder einem daraus bestimmten Radienfehler (ΔR) orthogonalisiert werden.

**6.** Verfahren nach einem vorstehenden Anspruch, bei dem das Gaußsche Rauschen (GN) durch eine Entscheidung auf Basis einer Radialdifferenz (ΔR) einer Radialkomponente des empfangenen Symbols (S) bestimmt oder abgeschätzt wird.

**7.** Verfahren nach einem vorstehenden Anspruch, bei dem zum Bestimmen oder Abschätzen des Phasenrauschens (PN) nur auf zumindest einem äußeren Radius (R6 - R9) empfangene oder entschiedene Symbole (S) verwendet werden oder empfangene oder entschiedene Symbole (S) auf zumindest einem äußeren Radius (R6 - R9) stärker gewichtet werden als empfangene oder entschiedene Symbole (S) auf zumindest einem inneren Radius (R1 - R5) verwendet werden.

**8.** Verfahren nach einem vorstehenden Anspruch, bei dem zum Bestimmen oder Abschätzen des Phasenrauschens (PN) ein Gang eines Phasendrehwinkels (p) verwendet, insbesondere verfolgt wird, wobei der Phasendrehwinkel (p) einer Drehung eines Koordinatensystems eines Entscheiders zum Entscheiden des Symbols (S) relativ zu einem Koordinatensystem des Eingangssignals entspricht.

**9.** Verfahren nach Anspruch 8, bei dem zur Integralbildung zueinander benachbarte Winkeldifferenzen des Phasendrehwinkels (p) mit einer einfachen Verzögerung ($z^{-1}$) aufaddiert werden.

**10.** Verfahren nach Anspruch 8, bei dem zur Integralbildung Winkeldifferenzen des Phasendrehwinkels (p) mit einer mehrfachen Verzögerung ($z^{-n}$) um zueinander beabstandete Winkeldifferenzen aufaddiert werden.

**11.** Schaltungsanordnung zum Entscheiden eines Symbols (D) beim Empfang eines Eingangssignals mit mit einem Quadratursignalpaar (I, Q) gekoppelten empfangenen Symbolen (S), wobei zumindest einem solchen empfangenen Symbol (S) Phasenrauschen (PN) und Gaußsches Rauschen (GN) überlagert sind, wobei die Schaltungsanordnung aufweist

- eine Anordnung und/oder Steuerung zum Bestimmen oder Abschätzen sowohl des Phasenrauschens (PN) als auch des Gaußschen Rauschens (GN) des zumindest eines solchen empfangenen Symbols (S) und
- eine Regelungsanordnung und/oder Regelüngssteuerung zum Regeln von Empfangsparametern für Entscheidungen nachfolgend empfangener Symbole (S),

**dadurch gekennzeichnet , dass**

- die Anordnung und/oder Steuerung zum Bestimmen oder Abschätzen sowohl des Phasenrauschens (PN) als auch des Gaußschen Rauschens (GN) ausgelegt oder gesteuert ist das Bestimmen oder Abschätzen des Phasenrauschens (PN) und des Gaußschen Rauschens (GN) zwischen dem Phasenrauschen (PN) und dem Gaußschen Rauschen unterscheidend durchzuführen, und mit der Regelungsanordnung und/oder Regelungssteuerung verbunden ist zum Anlegen eines Ergebnisses des unterscheidenden Bestimmens oder Abschätzens an die Regelungsanordnung und/oder Regelungssteuerung zur Regelung der Empfangsparametern.

**12.** Schaltungsanordnung nach Anspruch 11 mit zum unterscheidenden Bestimmen oder Abschätzen des Phasenrauschens (PN) und des Gaußschen Rauschens (GN)

- einem Rotator (6) zum phasenkorrigierenden Drehen eines solchen empfangenen Symbols (S) mittels eines bereits geschätzten Phasendrehwinkels (ρ),
- einem dem Rotator (6) nachgeschalteten kartesisch entscheidenden ersten Entscheider (7), der zum Bestimmen eines ersten Phasenfehlers (ΔΦ1) und/oder eines ersten Radienfehlers (ΔR1) ausgestaltet und/oder programmiert ist, und
- einem dem Rotator (6) nachgeschalteten und zumindest polar entscheidenden zweiten Entscheider (8), der zum Bestimmen eines zweiten Phasenfehlers (ΔΦ2) und/oder eines zweiten Radienfehlers (ΔR2) ausgestaltet und/oder programmiert ist.

13. Schaltungsanordnung nach Anspruch 12 mit

- einem Umschalter und/oder Mischer (X4), der ausgestaltet und/oder programmiert ist zum Bestimmen des Phasendrehwinkels (ρ) oder einer Phasendifferenz (ΔΦp) den ersten kartesisch bestimmten und den zweiten polar bestimmten Phasenfehler (ΔΦ1, ΔΦ2) zu mischen und/oder zwischen dem ersten und dem zweiten Phasenfehler (ΔΦ1, ΔΦ2) umzuschalten und zum Ausgeben einer Phasendifferenz (ΔΦp) für ein Phasenregelungsmodul (PC) einer Phasenregelschleife, und/oder
- einem Umschalter und/oder Mischer (X5), der ausgestaltet und/oder programmiert ist und/oder zum Bestimmen einer Frequenzdifferenz (ΔΦf) zur Frequenzregelung den ersten kartesisch bestimmten und den zweiten polar bestimmten Phasenfehler (ΔΦ1, ΔΦ2) zu mischen und/oder zwischen dem ersten und dem zweiten Phasenfehler (ΔΦ1, ΔΦ2) umzuschalten und zum Ausgeben einer Phasendifferenz (ΔΦp) für ein Frequenzregelungsmodul (FC) einer Frequenzregelschleife.

14. Schaltungsanordnung nach Anspruch 12 oder 13 mit einer Anordnung zum Bestimmen eines Radienfehlers (ΔR) als Regelungsgröße für ein Amplitudenkorrekturmodul (2) zum Korrigieren des Gaußschen Rauschens des Quadratursignalpaars (I, Q), aufweisend einen Umschalter und/oder Mischer (X6), der ausgestaltet und/oder programmiert ist zum Bestimmen des Radienfehlers (ΔR) den ersten kartesisch bestimmten Radienfehler (ΔR1) und den zweiten polar bestimmten Radienfehler (ΔR2) zu mischen und/oder zwischen dem ersten und dem zweiten Radienfehler (ΔR1, ΔR2) umzuschalten.

15. Schaltungsanordnung nach Anspruch 12 oder 14 mit einer Steuereinrichtung (CU), die ausgestaltet und/oder programmiert ist im Fall eines verbleibenden Ansprechens des Phasenrauschens (PN) nach dessen Bestimmung oder Abschätzen auf das Gaußsche Rauschen (GN) nach Bestimmung oder Abschätzen des Gaußschen Rauschens (GN) und dessen Korrektur Messwerte oder bestimmte oder abgeschätzte Werte des Phasenrauschens (PN) und des Gaußschen Rauschens (GN) zu orthogonalisieren, insbesondere einerseits den ersten oder zweiten Phasenfehler (ΔΦ1, ΔΦ2) oder eine daraus ermittelte Phasendifferenz (ΔΦ) zu andererseits dem ersten oder zweiten Radienfehler (ΔR1, ΔR2) oder einem daraus bestimmten Radienfehler (ΔR) zu orthogonalisieren.

16. Schaltungsanordnung nach einem der Ansprüche 11 bis 15 mit zum Bestimmen oder Abschätzen des Phasenrauschens (PN) einer Verzögerungsanordnung (12 - 17, CU), die ausgestaltet und/oder programmiert ist einen Gang eines Phasendrehwinkels (p) mittels in Reihe geschaltete Verzögerungsglieder (12) zu verfolgen, wobei jeweils ein Subtraktionsglied (13) zum Bilden einer Differenz zwischen Eingang und Ausgang eines diesem zugeordneten der Verzögerungsglieder (12) geschaltet ist, und wobei die Verzögerungsanordnung (12 - 17, CU) geschaltet oder programmiert ist eine Summe von Betragswerten dieser Differenzen als Maß für das Phasenrauschen (PN) an eine Steuereinrichtung (CU) anzulegen.

17. Schaltungsanordnung nach einem der Ansprüche 11 bis 16, die ausgestaltet ist und/oder ein darin gespeichertes Programm aufweist und/oder verwendet wird zum Durchführen eines Verfahrens nach einem der Ansprüche 1 bis 10.

FIG 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1201066 B1
- EP 1523144 A2
- EP 1523146 A2
- EP 1523146 A